# EUROPEAN PATENT APPLICATION

(11) **EP 4 484 517 A1**
(43) Date of publication of application: **01.01.2025**
(21) Application number: 23306030.0
(22) Date of filing: 27.06.2023
(51) Int. Cl.: C09J 153/02, C09J 7/38

(54) **HOT MELT ADHESIVE**

(71) Applicant: Bostik SA, 92700 Colombes (FR)
(72) Inventor: LIBRALESSO, Laurianne, VENETTE (FR); KOMAR, Stéphanie, VENETTE (FR)
(74) Representative: Arkema Patent

(57) **Abstract**

The invention relates to a hot melt adhesive composition comprising:
- a styrene block polymeric component;
- at least one tackifying resin;
- at least one fatty acid or fatty acid derivative F1 having a weight average molecular weight lower than or equal to 1500 g/mol;
- at least one fatty acid derivative F2 having a weight average molecular weight higher than or equal to 2500 g/mol.

## Description

### TECHNICAL FIELD

The present invention relates to hot melt adhesives, in particular useful for hygiene disposable articles, and more particularly for adhering feminine sanitary pads or adult incontinent products on a variety of fabrics.

### TECHNICAL BACKGROUND

Hot melt adhesives (HM adhesives) are substances which are solid at room temperature and which comprise neither water nor solvent. They are applied in the molten state after heating to a temperature generally of between 120 and 250°C, most often between 130 and 180°C, and solidify during cooling, thus forming a seal (or adhesive joint) which ensures the attachment of the two substrates to be assembled. Hot melt adhesives are generally provided in the form of compositions which comprise a thermoplastic polymer and optionally a tackifying resin and a plasticizer. Among these HM adhesives, hot melt pressure sensitive adhesives (HMPSA) are substances conferring an immediate tackiness property (also called *"tack")* to a substrate coated with such adhesive which allows its instantaneous adhesion to another substrate under a slight and brief pressure, at room temperature.

Hot melt adhesives have been used for many years in the construction of a wide variety of disposable nonwoven goods, such as disposable diapers, training pants, adult incontinent products (pads or briefs), feminine care products (napkins or pads) and surgical masks. These items aim at receiving and containing body fluids and are usually worn against or in close proximity to the skin. One specific application where HMPSA have traditionally been used is to adhere a periodic care article to a consumer's undergarment. This requires a precise balance of adhesion properties to ensure the article is adhered so that its stays in place during use but is also capable of being removed without leaving residue on or damaging the undergarment. Historically, these HMPSA have been formulated using styrene block copolymers. Besides, conventional hot melt adhesives are petrochemical-based, and rely on energy-intensive processes. In addition, a large percentage of the petroleum is transported from various parts of the world, which increases the carbon footprint. Generally, zero to very few raw materials in hot melt adhesives are made from renewable resources and thus contribution is not enough on the impact of the environment. There is an increased desire to reduce carbon footprint and to produce environmentally sound products. One method of making an environmentally sound adhesive is to decrease carbon footprint by forming a hot melt adhesive from materials having a high renewable resource content. Besides, adhesives made from renewable materials do not necessarily allow to reach similar or better properties than conventional petroleum-based adhesives.

There is thus a need for providing environment-friendly hot melt adhesives that allows to resolve at least a part of the above-mentioned drawbacks.

There is a need for providing an environment-friendly hot melt adhesive composition exhibiting good adhesion properties on a variety of substrate materials and fabrics, and more particularly a hot melt adhesive composition that is capable to efficiently adhere hygiene disposable articles on fabrics, while making it possible to reduce and even avoid residues on the fabric (e.g. under garment) after removal of the article.

There is also a need for an environment-friendly hot melt adhesive composition exhibiting good peel after exposure at body temperature to enable removal of the hygiene disposable article (such as for example pad) after being used by the consumer.

### SUMMARY OF THE INVENTION

The present invention relates to a hot melt adhesive composition comprising:
- a styrene block polymeric component;
- at least one tackifying resin;
- at least one fatty acid or fatty acid derivative F1 having a weight average molecular weight lower than or equal to 1500 g/mol;
- at least one fatty acid derivative F2 having a weight average molecular weight higher than or equal to 2 000 g/mol.

In an embodiment, the styrene block copolymer is selected from the group consisting of SB, SI, SEB, SEP, SBBS, SBS, SEBS, SEPS, SEEPS, SIBS, SIS, random-block SBR, random-block SIR and mixtures thereof.

Preferably, the styrene block polymeric component comprises at least one SIS copolymer or at least one random block SBR, more preferably at least one SIS copolymer.

In an embodiment, the hot melt adhesive composition comprises from 5 % to 35 %, more preferably from 10% to 30%, and even more preferably from 15% to 30% by weight of styrene block polymeric component, based on the total weight of the hot melt adhesive composition.

Preferably, the at least one tackifiying resin is chosen from the group consisting of:
- i) natural and modified rosins and the hydrogenated derivatives thereof, such as, for example, gum rosins, wood rosins, tall-oil rosins, distilled rosins, dimerized rosins and polymerized rosins;
- ii) glycol, glycerol and pentaerythritol esters of natural and modified rosins, and the hydrogenated derivatives thereof, such as, for example, the glycerol esters of pale wood rosin, the glycerol esters of hydrogenated rosin, the glycerol esters of polymerized rosin, the pentaerythritol esters of pale wood rosin, the pentaerythritol esters of hydrogenated rosin, the pentaerythritol esters of tall oil rosin, the tall oil rosin esters obtained from a mixture of glycerol and pentaerythritol, the pale wood rosin esters obtained from a mixture of glycerol and pentaerythritol, the hydrogenated rosin esters obtained from a mixture of glycerol and pentaerythritol, the esters of polymerized rosin obtained from a mixture of glycerol and pentaerythritol, and the phenolic modified pentaerythritol esters of rosin;
- iii) polyterpene homopolymers;
- iv) copolymers of terpene with a diene monomer ;
- v) phenolic-modified terpene resins such as, for example those resulting from the condensation, in an acidic medium, of a terpene and a phenol;
- and mixtures thereof.

In one embodiment, the hot melt adhesive composition comprises from 30% to 65 %, more preferably from 45% to 60 %, even more preferably from 50% to 60%, by weight of a tackifying resin (or of the mixture of tackifying resins in case a plurality of tackifying resins are present in the hot melt adhesive composition), based on the total weight of the hot melt adhesive composition.

Preferably, the hot melt adhesive composition comprises from 15% to 35% by weight of at least one tackifier resin ii) and from 15% to 35% by weight of at least one tackifier resin iii).

In one embodiment, the fatty acid or fatty acid derivative F1 has a weight average molecular weight lower than or equal to 1 000 g/mol, more preferably ranges from 250 g/mol to 1 000 g/mol, and even more preferably, the fatty acid or fatty acid derivative F1 has a weight average molecular weight ranging from 300 g/mol to 800 g/mol.

Preferably, the fatty acid derivative is selected from the group consisting of: fatty acid amides, fatty acid esters, dimers or trimers fatty acid, fatty alcohols, fatty aldehydes, fatty ketones, their hydrogenated derivatives, and mixtures thereof.

Preferably, the fatty acid derivative F1 is a fatty ester selected from the group consisting of:
- fatty acid esters resulting from chemical reaction between polyol and/or monol with one or several fatty acids or triglycerides, the chemical reaction being selected from esterification, transesterification;
- fatty acid esters resulting from functionalization (derivatization) of another fatty acid ester;
- monoglyceride, diglyceride, triglycerides, and mixtures thereof;
- fatty acid polyesters; and
- mixtures thereof.

Preferably, the fatty acid or fatty acid derivative F1 has a viscosity lower than or equal to 5000 mPas at 25°C, more preferably lower than or equal to 3000 mPas at 25°C.

In one embodiment, the total content of fatty acid or fatty acid derivatives F1 ranges from 3% to 50% by weight, more preferably from 3% to 30% by weight, and even more preferably from 3% to 20% by weight based on the total weight of the hot melt adhesive composition.

Preferably, F1 is a fatty acid derivative, more preferably it is a fatty acid ester, and even more preferably a fatty acid ester resulting from chemical reaction between polyol and/or monol with one or several fatty acids or triglycerides, the chemical reaction being selected from esterification, transesterification.

In one embodiment, the fatty acid derivative F2 has a weight average molecular weight higher than or equal to 2 500 g/mol, more preferably ranges from 3 000 g/mol to 12 000 g/mol, and even more preferably, the fatty acid derivative F2 has a weight average molecular weight ranging from 3 000 g/mol to 6 000 g/mol.

Preferably, the fatty acid derivative F2 has an acid number ranging from 1 to 20, more preferably from 3 to 20 mg KOH/g.

Preferably, the fatty acid derivative F2 is a fatty acid ester, more preferably a fatty acid polyester, and even more preferably, the fatty acid derivative F2 is a homopolymer of ricinoleic acid.

In one embodiment, the total content of fatty acid derivatives F2 in the hot melt adhesive composition ranges from 3% to 50% by weight, more preferably from 5% to 30% by weight, and even more preferably from 7% to 20% by weight based on the total weight of the hot melt adhesive composition.

Preferably, the weight ratio R = F1 / F2 ranges from 10 / 90 to 90 / 10, more preferably from 15/85 to 85/15, and even more preferably from 20 / 80 to 60 / 40.

Preferably, the biocarbon content of the hot melt adhesive is greater than or equal to 60 %, preferably greater than or equal to 65 %, and even more preferably greater than or equal to 70 %.

Preferably, the total average styrene content of the hot melt adhesive composition ranges from 5% to 15%, preferably from 6% to 10%.

The present invention also relates to the use of a hot melt adhesive composition of the present invention, for adhering a hygiene disposable article on a fabric.

The present invention also relates to an article comprising at least one interior or exterior surface, preferably at least one exterior surface, coated with the hot melt adhesive composition of the invention.

### DETAILED DESCRIPTION

The invention will now be described in more details without limitation in the following description.

Unless otherwise mentioned, the percentages in the present application are percentages by weight.

In the present text, the amounts indicated for a given species can apply to this species according to all its definitions (as mentioned in the present text), including the narrower definitions.

### Hot melt adhesive composition

In a first aspect, the present invention relates to a hot melt adhesive composition. The term *"hot melt'* is used herein to describe that the adhesive composition requires to be heated at least at 120°C, preferably at least at 140°C, to be applied on a substrate. The hot melt adhesive composition is thus solid at 23°C.

The present invention relates to a hot melt adhesive composition comprising:
- a styrene block polymeric component;
- at least one tackifying resin;
- at least one fatty acid or fatty acid derivative F1 having a weight average molecular weight lower than or equal to 1500 g/mol;
- at least one fatty acid derivative F2 having a weight average molecular weight higher than or equal to 2000 g/mol.

### Styrene block polymeric component

The hot melt adhesive composition of the invention comprises a styrene block polymeric component. By *"styrene block polymeric component'* is meant a component consisting of at least one SBC (styrene block copolymer) *i.e.* a copolymer comprising at least one styrene block, including styrene triblock copolymers and styrene diblock copolymers.

The styrene block copolymer has at least one A block that includes styrene and at least one B block that includes, e.g., elastomeric conjugated dienes (e.g., hydrogenated and unhydrogenated conjugated dienes), sesquiterpenes (e.g., hydrogenated and nonhydrogenated sesquiterpenes), and combinations thereof. The A blocks and the B blocks bind to one another in any manner of binding such that the resulting copolymer exhibits a variety of structures including, e.g., random, straight-chained, branched, radial, star, comb, tapered, and combinations thereof. The block copolymer can exhibit any form including, e.g., linear A-B block, linear A-B-A block, linear A-(B-A)n-B multi-block, and radial (A-B)n-Y block where Y is a multivalent compound and n is an integer of at least 3, tetrablock copolymer, e.g., A-B-A-B, and pentablock copolymers having a structure of A-B-A-B-A.

Suitable styrene A blocks include, e.g., styrene, alpha-methylstyrene, o-methylstyrene, m-methylstyrene, p-methylstyrene, p-tert-butylstyrene, 2,4-dimethylstyrene, 2,4,6-trimethylstyrene, and combinations thereof.

Suitable block elastomeric conjugated diene B blocks include, e.g., butadiene (e.g., polybutadiene), isoprene (e.g., polyisoprene), 2,3-dimethyl-1,3-butadiene, 1,3-pentadiene, 1,3-hexadiene, and combinations thereof, and hydrogenated versions thereof including, e.g., ethylene, propylene, butylene and combinations thereof.

Suitable B block sesquiterpenes include, e.g., beta farnesene.

The styrene block polymeric component can comprise one styrene block copolymer or a mixture of different styrene block copolymers.

When more than one styrene block copolymer is included the styrene content, the diblock content and the melt flow rate ranges specified for the styrene block polymeric component are a weight average of all the grades present. As an example, if the styrene block polymeric component comprises two styrene block copolymers X and Y. Polymer X is present at 25 weight % (wX) with a styrene content of 15% (sX) and polymer Y is present at 25 weight % (wY) with a styrene content of 20 weight % (sY). The average styrene content of the styrene block polymeric component is calculated in the following way: wX/(wX+wY)* sX + wY/( wX+wY)* sY = 0.5 (15) + 0.5 (20) = 17.5 weight %).

The styrene block polymeric component has preferably an average styrene content of from 10% by weight to 50% by weight, more preferably from 10% by weight to 40% by weight, and even more preferably from 10% to 30%.

The styrene block polymeric component preferably comprises from 0% by weight to 40%, more preferably from 0% by weight to 30% by weight, and even more preferably from 0% by weight to 15% by weight diblock.

By *"diblock content"* is meant the weight proportion of diblock copolymers in the styrene block polymeric component.

The styrene block copolymer may be selected from the group consisting of SB, SI, SEB, SEP, SBBS, SBS, SEBS, SEPS, SEEPS, SIBS, SIS, random-block SBR, random-block SIR and mixtures thereof.

Preferably, the styrene block polymeric component comprises at least one SIS copolymer or at least one random block SBR.

More preferably, the styrene block polymeric component comprises at least one SIS copolymer.

By *"SBBS"* is meant a styrene-butadiene-butylene-styrene triblock copolymer. By *"SBS"* is meant a styrene-butadiene-styrene triblock copolymer. By *"SEBS"* is meant a styrene-ethylene-butylene-styrene triblock copolymer. By *"SEPS"* is meant a styrene-ethylene-propylene-styrene triblock copolymer. By *"SEEPS"* is meant a styrene-ethylene-ethylene-propylene-styrene triblock copolymer. By *"SIBS"* is meant a styrene-isoprene-butadiene-styrene triblock copolymer. By "SIS" is meant a styrene-isoprene-styrene triblock copolymer. By *"random-block SBR"* is meant random-block styrene butadiene copolymers (part of the styrene being present as polystyrene blocks). By *"random-block SIR"* is meant random-block isoprene butadiene copolymers (part of the styrene being present as polystyrene blocks). By *"SB"* is meant a styrene-butadiene diblock copolymer. By *"SI"* is meant a styrene-isoprene diblock copolymer. By *"SEB"* is meant a styrene-ethylene-butylene diblock copolymer. By *"SEP"* is meant a styrene-ethylene-propylene diblock copolymer.

Advantageously, the styrene block polymeric component may comprise, based on the total weight of the styrene block polymeric component:
- from 10 to 100 % by weight of at least one linear styrene triblock copolymer (a) ; and
- from 0 to 90 % by weight of at least one linear diblock styrene block copolymer (b).

More preferably, the linear styrene triblock copolymer (a) is a SIS, and the diblock styrene block copolymer (b) is SI.

Useful commercial styrene block copolymers include KRATON D and G ^{®} series from Kraton Polymers, EUROPRENE Sol T ^{®} series from Versalis (Eni group), SOLPRENE ^{®} series from Dynasol Elastomers, SINOPEC ^{®} series from SINOPEC and Taipol ^{®} and Vector^{®} series from TSRC Corporation. Other useful examples include:
- Sinopec^{®} YH-1126, a linear SIS triblock copolymer with a styrene content of 16 %, and a diblock content of 50 %;
- Sinopec^{®} YH-1209, a linear SIS triblock copolymer with a styrene content of 30 %, and a diblock content of less than 1 %;
- Kraton^{®} D1152, a mixture of linear SBS triblock and SB diblock copolymers, with a styrene content of 29.5 % by weight relative to the total weight of the mixture, an average molecular weight of around 122 000 g/mol, a melt flow index or MFI (measured according to ISO1133) of 8.5 grams/ 10 minutes at 200°C under a load of 5 kilograms, and a SB diblock content of around 17 % by weight relative to the total weight of the mixture.

- Kraton^{®} D1161, a mixture of linear SIS triblock and SI diblock copolymers, with a styrene content of 15 % by weight relative to the total weight of the mixture, an MFI (measured according to ISO1133) of 9 g/10 min at 200°C under a load of 5 kg, an average molecular weight of around 220 000 g/mol, and a SI diblock content of around 19 % by weight relative to the total weight of the mixture.
- Taipol^{®} SBS 4202 from TSRC Corporation, a linear SBS triblock copolymer with a styrene content of 40 % by weight relative to the total weight of the triblock copolymer, a MFI (measured according to ASTM D1238) of 3 to 10 g/10 min at 190°C under a load of 5 kg, an average molecular weight of around 102 400 g/mol.
- Vector^{®} 4411 from TSRC Corporation, a linear SIS triblock copolymer with a styrene content of 44 % by weight relative to the total weight of the triblock copolymer, an MFI (measured according to ASTM D1238) of 40 g/10 min at 200°C under a load of 5 kg, an average molecular weight of around 106 000 g/mol.
- Europrene^{®} SOL TE9326 (linear SIS triblock copolymer, styrene block content of about 30 %, diblock content of about 15 % from Versalis.

Preferably, the hot melt adhesive composition is substantially free of radial styrene block copolymers.

The hot melt adhesive composition preferably comprises from 5 % to 35 % by weight of styrene block polymeric component, based on the total weight of the hot melt adhesive composition. More preferably, the hot melt adhesive composition comprises from 10% to 30 % by weight, even more preferably from 15 % to 30 % by weight, of styrene block polymeric component, based on the total weight of the hot melt adhesive composition.

### Tackifying resin

The hot melt adhesive composition comprises at least one tackifying resin (tackifier).

Suitable tackifying resins for the invention are those which are compatible with the styrene block polymeric component.

The tackifiying resin may be selected from the group consisting of:
- Aliphatic petroleum hydrocarbon resins, resulting from the polymerization of monomers consisting primarily of olefins and di-olefins, and the hydrogenated derivatives thereof;
- Cyclic petroleum hydrocarbon resins and the hydrogenated derivatives thereof;
- Aromatic petroleum hydrocarbon resins and the hydrogenated derivatives thereof;
- Aromatic-modified cycloaliphatic resins and the hydrogenated derivatives thereof;
- Aromatic-modified aliphatic resins and the hydrogenated derivatives thereof;
- Terpene-based resin and the hydrogenated derivatives thereof;
- Rosin-based resin and the hydrogenated derivatives thereof;
- Mixtures thereof.

Examples of suitable tackifying resins include those commercially available under the tradenames Eastotac^{®} H 100W (resin C5 fully hydrogenated) from Eastman Chemical Company; Escorez^{®} 2203LC (resin C5/C9) from ExxonMobil Chemical company; Sukorez^{®} SU 120 (resin DCPD fully hydrogenated), Sukorez^{®} SU 210 (resin DCPD/C5 fully hydrogenated), Sukorez^{®} SU 420 (resin DCPD/C9 partially hydrogenated), Sukorez^{®} SU525 (resin DCPD fully hydrogenated) and Hikorez^{®} H2100 (resin C5 hydrogenated) from Kolon; Regalite^{®} S7125 (resin C9 partially hydrogenated) from Eastman Chemical Company; HS-130 (resin DCPD hydrogenated) from Hanwha Solutions/chemical Corporation; Luhorez HD1120 (resin DCPD hydrogenated) from Tianjin Luhua Chemical; Henghe HM1000 (resin DCPD/C9 hydrogenated) and Henghe H5-1001 (resin C5 fully hydrogenated) from Henghe Materials and Science Technology Co. LTD; unmodified natural tall oil rosins from Kraton sold under the trade names Sylvaros^{®} (85, 90 and NCY); partially hydrogenated rosin from Eastman sold under the trade name Foralyn^{®} E; the fully hydrogenated rosin from Eastman sold under the trade name Foral^{®} AX-E; the fully hydrogenated rosin from DRT sold under the trade name Foral^{®}DX; the fully hydrogenated rosin ester from DRT sold under the trade name Foral^{®} 105; the dimerized rosin from Eastman sold under the trade name Dymerex^{®}; Sylvalite^{®} RE 100L ou RE 100S (pentaerythritol based tall-oil rosin ester), Sylvalite^{®} RE 85L (a glycerol ester of tall oil rosin) from Kraton; Sylvalite 9000 from Kraton (fully hydrogenated tall oil rosin ester); polyterpene tackifiers from Kraton sold under the trade names Sylvagum^{®} TR and Sylvares^{®} TR series (7115, 7125, A25L, B115, M1115); the polyterpene PX1250H from Yasuhara; the polyterpene from DRT sold under the trade name DERCOLYTEOM105 (resulting from the polymerization of α-pinene and β-pinene and having a Ring and Ball softening point of 105°C); the terpene phenol resins from Kraton sold under the trade names Sylvares^{®} TP (96, 2040, 300, 7042, 2019).

The terpene-based resins include polyterpene homopolymers, copolymers of terpene with a diene monomer (for example styrene, α-methylstyrene, etc), phenolic-modified terpene resins.

The term "copolymers" typically include terpolymers.

The hydrogenated derivatives typically include both partially and fully hydrogenated derivatives.

The rosin-based resins include rosins and rosin esters.

The tackifying resin may have a Ring and Ball softening point (as measured according to ASTM E28) from about 50°C to about 140°C, such as, for example, from about 50 to about 90°C, or from about 90 to about 120°C, or from about 120 to about 140°C.

Preferably, at least one tackifiying resin is chosen from the group consisting of:
- i) natural and modified rosins and the hydrogenated derivatives thereof, such as, for example, gum rosins, wood rosins, tall-oil rosins, distilled rosins, dimerized rosins and polymerized rosins;
- ii) glycol, glycerol and pentaerythritol esters of natural and modified rosins, and the hydrogenated derivatives thereof, such as, for example, the glycerol esters of pale wood rosin, the glycerol esters of hydrogenated rosin, the glycerol esters of polymerized rosin, the pentaerythritol esters of pale wood rosin, the pentaerythritol esters of hydrogenated rosin, the pentaerythritol esters of tall oil rosin, the tall oil rosin esters obtained from a mixture of glycerol and pentaerythritol, the pale wood rosin esters obtained from a mixture of glycerol and pentaerythritol, the hydrogenated rosin esters obtained from a mixture of glycerol and pentaerythritol, the esters of polymerized rosin obtained from a mixture of glycerol and pentaerythritol, and the phenolic modified pentaerythritol esters of rosin;
- iii) polyterpene homopolymers;
- iv) copolymers of terpene with a diene monomer ;
- v) phenolic-modified terpene resins such as, for example those resulting from the condensation, in an acidic medium, of a terpene and a phenol;
- and mixtures thereof.

More particularly, the hot melt adhesive composition comprises a mixture of at least one tackifying resin ii) and at least one tackifying resin iii) as defined above.

The term *"bio-carbon"* indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from CO₂ recently fixed (on a human scale) by photosynthesis from the atmosphere. On earth, this CO₂ is captured or fixed by plants. At sea, CO₂ is captured or fixed by bacteria or plankton carrying out photosynthesis. A biomaterial (100% carbon of natural origin) has a ¹⁴C/¹²C isotope ratio greater than 10⁻¹², typically of approximately 1.2 x 10⁻¹², while a fossil material has a zero ratio. Indeed, the isotope ¹⁴C is formed in the atmosphere and is then integrated by photosynthesis, according to a time scale of a few decades at most. The half-life of ¹⁴C is 5730 years. Thus, materials resulting from photosynthesis, namely plants in general, necessarily have a maximum ¹⁴C isotope content.

The biomaterial content or biocarbon content is determined by using the standards ASTM D 6866 (ASTM D 6866-06) and ASTM D 7026 (ASTM D 7026-04). The ASTM D 6866 standard is *"Determining the Biobased Content of Natural Range Materials Using Radiocarbon and Isotope Ratio Mass Spectrometry Analysis",* while the ASTM D 7026 standard is *"Sampling and Reporting of Results for Determination of Biobased Content of Materials via Carbon Isotope Analysis".* The second standard makes reference in its first paragraph to the first standard.

The first standard describes a test for measuring the ¹⁴C/¹²C ratio of a sample and compares it with the ¹⁴C/¹²C ratio of a reference sample of 100 % renewable origin, to give a relative percentage of C of renewable origin in sample. The standard is based on the same concepts as ¹⁴C dating, but without applying the dating equations.

The ratio thus calculated is referred to as the *"pMC"* (percent Modern Carbon). If the material to be analyzed is a mixture of biomaterial and fossil material (without radioactive isotope), then the pMC value obtained is directly correlated with the quantity of biomaterial present in the sample. The reference value used for the ¹⁴C dating is a value dating from the 1950s. This year was chosen because of the existence of nuclear tests in the atmosphere which introduced large quantities of isotopes into the atmosphere after this date. The 1950 reference corresponds to a pMC value of 100. Taking into account the thermonuclear tests, the current value to be retained is approximately 107.5 (which corresponds to a correction factor of 0.93). The radioactive carbon signature of a current plant is therefore 107.5. A signature of 54 pMC and 99 pMC therefore correspond to an amount of biocarbon in the sample of 50 % and 93 %, respectively.

The tackifying resin may have a biocarbon content equal to or higher than 70 %, preferably equal to or higher than 80 %, and more preferably equal to or higher than 90 %.

The tackifying resin has preferably a PAH content lower than or equal to 500 ppb (part per billion). As used herein the term "PAH" refers to polycyclic aromatic hydrocarbons such as for example fluorene, hydroxyfluorene, fluorenone.

The content of PAH may be measured by GC-MSDS with sample prepared through liquid-liquid extraction with acetonitrile dried with hexane.

PAHs are suspected to be carcinogenic and should be avoided in hygiene market.

The hot melt adhesive composition preferably comprises from 30% to 65 %, more preferably from 45% to 60 %, even more preferably from 50% to 60%, by weight of a tackifying resin (or of the mixture of tackifying resins in case a plurality of tackifying resins are present in the hot melt adhesive composition), based on the total weight of the hot melt adhesive composition.

Preferably, the hot melt adhesive composition comprises from 15% to 35% by weight of at least one tackifier resin ii) and from 15% to 35% by weight of at least one tackifier resin iii).

### F1 : Fatty acid or fatty acid derivative

The hot melt adhesive composition comprises at least one fatty acid or at least one fatty acid derivative, referred as F1.

The fatty acid or fatty acid derivative F1 has a weight average molecular weight lower than or equal to 1 500 g/mol, preferably lower than or equal to 1 000 g/mol, and even more preferably ranges from 250 g/mol to 1 000 g/mol. Even more preferably, the fatty or fatty acid derivative F1 has a weight average molecular weight ranging from 300 g/mol to 800 g/mol.

The weight average molecular weights are determined by gel permeation chromatography, using standards such as polystyrene. More particularly, it is determined with a Waters alliance instrument, using THF as eluent, with a flow rate of 1ml/min at 35°C, calibrated with polystyrene.

Herein, the fatty acid refers to an aliphatic carboxylic acid having at least one carboxy group, and may have one or several hydroxy groups. Fatty acids are broadly divided into saturated fatty acids and unsaturated fatty acids. The saturated fatty acid is an acid having no double bond and no triple bond in a carbon chain. The unsaturated fatty acid is an acid having one or several double bond or triple bond in a carbon chain.

The fatty acid may be selected from the group consisting of: butyric acid, caproic acid, caprylic acid, capric acid, lauric acid, myristic acid, palmitic acid, stearic acid, oleic acid, linoleic acid, erucic acid, ricinoleic acid, dihydrostearic acid, linoleic acid, eicostanic acid, 2-Hydroxybutanoic acid, 3-Hydroxybutanoic acid, 4-Hydroxybutyric acid, 2-Hydroxytetradecanoic acid, 3-Hydroxytetradecanoic acid, 2-Hydroxyhexadecanoic acid, 3-Hydroxyhexadecanoic acid, 3-Hydroxyoctadecanoic acid, 12-Hydroxyoctadecanoic acid, 17-Hydroxyoctadecanoic acid, and mixtures thereof.

The fatty acid may be derived from an animal fat, or a vegetable oil such as for example castor oil, sunflower oil, coconut oil, corn oil, canola oil, olive oil, palm oil, cottonseed oil, rapeseed oil, safflower oil, soybean oil, sesame oil, almond oil, avocado oil, hemp oil, and linseed oil. A vegetable oil is a composition comprising triple esters of fatty acids and of glycerol (also called *"triglycerides").*

The expression *"fatty acids derived from vegetable oil"* is thus intended to designate the fatty acids present in the molecular structure of these triglycerides. Said fatty acids can be obtained, in the form of isolated compounds, by saponification, hydrolysis or methanolysis of said triglycerides.

As used herein, the derivatives of the fatty acids (fatty acid derivatives) are fatty acid based components, which comprises at least one fatty acid radical within their backbone. Examples of fatty acid derivatives typically include compounds obtained by one or several chemical reactions involving fatty acids, or natural compound based on fatty acid.

Fatty acid derivative include both unsaturated and saturated fatty acid derivatives.

The fatty acid of the fatty acid derivatives are preferably as defined above for the fatty acid, more preferably selected from the group consisting of: butyric acid, caproic acid, caprylic acid, capric acid, lauric acid, myristic acid, palmitic acid, stearic acid, oleic acid, linoleic acid, erucic acid, ricinoleic acid, dihydroxystearic acid, linoleic acid, eicostanic acid, 2-Hydroxybutanoic acid, 3-Hydroxybutanoic acid, 4-Hydroxybutyric acid, 2-Hydroxytetradecanoic acid, 3-Hydroxytetradecanoic acid, 2-Hydroxyhexadecanoic acid, 3-Hydroxyhexadecanoic acid, 3-Hydroxyoctadecanoic acid, 12-Hydroxyoctadecanoic acid, 17-Hydroxyoctadecanoic acid, and mixtures thereof.

The fatty acid derivative F1 is preferably selected from the group consisting of: fatty acid amides, fatty acid esters, dimers or trimers of fatty acid, fatty alcohols, fatty aldehydes, fatty ketones, their hydrogenated derivatives, vegetable oil, animal fat, and mixtures thereof.

Preferably, the fatty acid derivative is not a vegetable oil, and not an animal fat.

More preferably, the fatty acid derivative F1 is selected from fatty acid esters, their hydrogenated derivatives, and mixtures thereof.

The hydrogenated derivatives may include both partially or completely hydrogenated derivatives.

The fatty acid amide may be any suitable amide compound derived from the reaction between a fatty acid and ammonia or an amine-containing compound (e.g., a compound containing a primary amine group or a secondary amine group).

Fatty acid esters can comprise one or several ester functions.

Fatty acid esters typically include:
- fatty acid esters resulting from chemical reaction between polyol and/or monol with one or several fatty acids or triglycerides, the chemical reaction being selected from esterification, transesterification. The triglycerides preferably come from vegetable oil or animal fat.

The mono-alcohol may be selected from methanol, ethanol, propanol, isopropanol, butanol, 2-ethylhexanol, phenol, fatty alcohol, and mixtures thereof. The polyol may be selected from glycerol, pentaerythritol, erythritol, sorbitol, ethylene glycol, propylene glycol, butylene glycol, 1,3-propanediol, 1,4-butanediol, 1,6-hexanediol, 1,4-cyclohexanediol, trimethylolpropane, pentaerythritol, diethylene glycol, triethylene glycol, tetraethylene glycol, pentaethylene glycol, hexaethylene glycol, and mixtures thereof. The fatty alcohol are typically derived from fats and oils, originating in plants, but also synthesized in animals and algae. The fatty alcohol may include oleyl alcohol, lauryl alcohol, stearyl alcohol, myristyl alcohol, palmitoleyl alcohol, nonadecyl alcohol, arachidyl alcohol, erucyl alcohol, etc.

Preferred examples are fatty acid alkyl esters. Fatty acid alkyl esters typically include hydrogenated ones. Fatty acid alkyl esters more preferably include fatty acid methyl esters, fatty acid ethyl esters, fatty acid isopropyl esters, fatty acid isobutyl esters, fatty acid isoamyl esters, fatty acid 2-ethylhexyl esters.

An example of a fatty acid derivative (fatty acid ester in particular) may be the commercially available RADIA 7916 (methyl stearate, acid number 0.4 mg KOH/g) or RADIA 7195 (isopropyl stearate, acid number 0.1 mg KOH/g), or RADIA 7231 (isopropyl oleate) commercialized by OLEON, or PIONIER^{®} TP130S from H&R (oleyl oleate, acid number 0.2 mg KOH/g).
- fatty acid esters resulting from functionalization (derivatization) of another fatty acid ester (such as for example epoxidation of a first fatty acid ester to provide a second fatty acid ester with epoxy moiety; alkoxylation ; acylation ; etc..);
- monoglyceride, diglyceride, triglycerides, and mixtures thereof;
- fatty acid polyesters; and
- mixtures thereof.

The fatty acid or fatty acid derivative F1 has preferably a biocarbon content higher than or equal to 60%, preferably higher than or equal to 80%, and even more preferably higher than or equal to 95%.

The fatty acid or fatty acid derivative F1 has preferably a viscosity lower than or equal to 5000 mPas at 25°C, more preferably lower than or equal to 3000 mPas at 25°C.

Preferably, the component F1 is a fatty acid derivative, more preferably it is a fatty acid ester, and even more preferably fatty acid ester resulting from chemical reaction between polyol and/or monol with one or several fatty acids (or triglycerides), the chemical reaction being selected from esterification, transesterification.

The total content of fatty acid or fatty acid derivatives F1 in the hot melt adhesive composition preferably ranges from 3% to 50% by weight, more preferably from 3% to 30% by weight, and even more preferably from 3% to 20% by weight based on the total weight of the hot melt adhesive composition.

### Fatty acid derivative F2

The hot melt adhesive composition comprises at least one fatty acid derivative F2 different from F1.

The fatty acid derivative F2 has a weight average molecular weight higher than or equal to 2 000 g/mol, preferably higher than or equal to 2 500 g/mol, and even more preferably ranges from 3 000 g/mol to 12 000 g/mol. Even more preferably, the fatty acid derivative F2 has a weight average molecular weight ranging from 3 000 g/mol to 6 000 g/mol.

The weight average molecular weights for F2 are determined with similar method disclosed above for F1.

As used herein, the derivatives of the fatty acids (fatty acid derivatives) are fatty acid based components, which comprises at least one fatty acid radical within their backbone. Examples of fatty acid derivatives typically include compounds obtained by one or several chemical reactions involving fatty acids, or natural compound based on fatty acid.

Fatty acid derivative include both unsaturated and saturated fatty acid derivatives.

The fatty acid of the fatty acid derivatives are preferably as defined above for the fatty acid, more preferably selected from the group consisting of: butyric acid, caproic acid, caprylic acid, capric acid, lauric acid, myristic acid, palmitic acid, stearic acid, oleic acid, linoleic acid, erucic acid, ricinoleic acid, dihydroxystearic acid, linoleic acid, eicostanic acid, 2-Hydroxybutanoic acid, 3-Hydroxybutanoic acid, 4-Hydroxybutyric acid, 2-Hydroxytetradecanoic acid, 3-Hydroxytetradecanoic acid, 2-Hydroxyhexadecanoic acid, 3-Hydroxyhexadecanoic acid, 3-Hydroxyoctadecanoic acid, 12-Hydroxyoctadecanoic acid, 17-Hydroxyoctadecanoic acid, and mixtures thereof.

The fatty acid derivative is preferably selected from the group consisting of: fatty acid amides, fatty acid esters, dimers or trimers of fatty acid, fatty alcohols, fatty aldehydes, fatty ketones, their hydrogenated derivatives, vegetable oil, animal fat, and mixtures thereof.

Preferably, the fatty acid derivative is not a vegetable oil, and not an animal fat.

More preferably, the fatty acid derivative F2 is selected from fatty acid esters, their hydrogenated derivatives, and mixtures thereof.

The hydrogenated derivatives may include both partially or completely hydrogenated derivatives.

The fatty acid amide may be any suitable amide compound derived from the reaction between a fatty acid and ammonia or an amine-containing compound (e.g., a compound containing a primary amine group or a secondary amine group).

Fatty acid esters can comprise one or several ester functions.

Fatty acid esters typically include:
- fatty acid esters resulting from chemical reaction between polyol and/or monol with one or several fatty acids or triglycerides, the chemical reaction being selected from esterification, transesterification. The triglycerides preferably come from vegetable oil or animal fat.

The mono-alcohol may be selected from methanol, ethanol, propanol, isopropanol, butanol, 2-ethylhexanol, phenol, fatty alcohol, and mixtures thereof. The polyol may be selected from glycerol, pentaerythritol, erythritol, sorbitol, ethylene glycol, propylene glycol, butylene glycol, 1,3-propanediol, 1,4-butanediol, 1,6-hexanediol, 1,4-cyclohexanediol, trimethylolpropane, pentaerythritol, diethylene glycol, triethylene glycol, tetraethylene glycol, pentaethylene glycol, hexaethylene glycol, and mixtures thereof. The fatty alcohol are typically derived from fats and oils, originating in plants, but also synthesized in animals and algae. The fatty alcohol may include oleyl alcohol, lauryl alcohol, stearyl alcohol, myristyl alcohol, palmitoleyl alcohol, nonadecyl alcohol, arachidyl alcohol, erucyl alcohol, etc.

Preferred examples are fatty acid alkyl esters. Fatty acid alkyl esters more preferably include fatty acid methyl esters, fatty acid ethyl esters, fatty acid isopropyl esters, fatty acid isobutyl esters, fatty acid isoamyl esters, fatty acid 2-ethylhexyl esters.
- fatty acid esters resulting from functionalization (derivatization) of another fatty acid ester (such as for example epoxidation of a first fatty acid ester to provide a second fatty acid ester with epoxy moiety; alkoxylation ; acylation ; etc..).
- monoglyceride, diglyceride, triglycerides, and mixtures thereof;
- fatty acid polyesters; and
- mixtures thereof.

Fatty acid polyesters are polymers/oligomers that contain ester function in at least one repeat unit of their main chain.

Fatty acid polyesters typically include fatty acid oligoesters and fatty acid copolyesters.

Fatty acid polyesters preferably include homopolymers of fatty acids, and copolymers of fatty acids (copolymerization of different fatty acid), and copolymers of fatty acids with polyol and/or monol, and mixtures thereof.

The homopolymers of fatty acids may result from the polycondensation of a fatty acid comprising hydroxyl group, or a mixture of fatty acids comprising at least one fatty acid with hydroxyl group.

Preferably, the homopolymers are homopolymers of ricinoleic acid.

Preferably, the fatty acid derivative F2 has a glass transition temperature lower than or equal to 0°C, more preferably lower than or equal to -20°C, and even more preferably ranging from -80°C to -20°C. The glass transition temperature may be measured by DSC analysis, according to ISO 11357-1:1999. More preferably, it is measured with the following conditions and parameters:
On a Mettler DSC 1 analyzer, a sample of 10 mg of sample is cooled under nitrogen flow from 23°C to -80°C for 10 minutes.
Then, the temperature is increased from -80°C to 200°C at a heating rate of 15°C/min (called first heating step)
After reaching 200°C and stabilized 5min, the temperature is decreased to -80°C, at a cooling rate of 15°C/min (called cooling step).
After reaching -80°C and stabilized 10 min, the temperature is increased to 200°C, at a heating rate of 15°C/min (called second heating step)
The glass transition temperature is measured on the second heating step, and correspond to the inflexion point Ti,g. This value can be measured at the peak maximum of the signal derivative.

Preferably, the fatty acid derivative F2 has an acid number ranging from 1 to 20, more preferably from 3 to 20 mg KOH/g. The acid number may be measured according to DIN EN ISO 2114:2000 (AC:2005).

The fatty acid derivative F2 has preferably a biocarbon content higher than or equal to 60%, preferably higher than or equal to 80%, and even more preferably higher than or equal to 95%.

The fatty acid derivative F2 has preferably a viscosity at 20°C ranging from 1000 to 5 000 mPas, more preferably from 1 500 to 2 500 mPas.

Preferably, the fatty acid derivative F2 is a fatty acid ester, and more particularly a fatty acid polyester. Even more preferably, the fatty acid derivative F2 is a homopolymer of ricinoleic acid.

Suitable fatty acid oligoesters and polyesters are commercially available from Vandeputte such as oligoesters of ricinoleic acid (acid number = 7 or 14 mg KOH/g), from Vandeputte such as VEOPUR 759035 (oligoester of castor oil - side OH groups of castor oil being transesterified with ester functions of the castor oil itself thus eliminating glycerol, acid number = 3 mg KOH/g).

The total content of fatty acid derivatives F2 in the hot melt adhesive composition preferably ranges from 3% to 50% by weight, more preferably from 5% to 30% by weight, and even more preferably from 7% to 20% by weight based on the total weight of the hot melt adhesive composition.

Preferably, in the hot melt adhesive composition, the weight ratio R = F1 / F2 ranges from 10 / 90 to 90 / 10, more preferably from 15 / 85 to 85 / 15, and even more preferably from 20 / 80 to 60 / 40.

Preferably, the hot melt adhesive composition comprises a total content of components F1 and F2 higher than 15 wt%, more preferably ranging from 17 wt% to 30 wt%, even more preferably ranging from 17 wt% to 27 wt%, based on the total weight of the hot melt adhesive composition.

### Stabilizer

The hot melt adhesive composition also preferably comprises at least one stabilizer, more preferably at least one antioxidant.

The hot melt adhesive composition comprises from about 0 to about 5 %, preferably from 0 to about 3 %, more preferably from about 0.1 to about 3 %, more preferably from about 0.1 to 2 %, by weight of a stabilizer, based on the total weight of the hot melt adhesive composition.

Suitable stabilizers are incorporated to help protect the polymers noted above, and thereby the total adhesive system, from the effects of thermal and oxidative degradation which normally occurs during the manufacture and application of the adhesive composition, as well as in the ordinary exposure of the final product to the ambient environment. Such degradation is usually manifested by deterioration in the appearance, physical properties and performance characteristics of the hot melt adhesive composition.

Among the applicable stabilizers, more particularly antioxidants, mention can be made of high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tert-butylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine; di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The performance of these antioxidants may be further enhanced by utilizing, in conjunction therewith: (1) synergists such as, for example, thiodipropionate esters and phosphites; examples of these include dialuryl thiodipropionate (DLTDP); and (2) chelating agents and metal deactivators as, for example, ethylenediaminetetraacitic acid, salts thereof and disalicylalpropylenediimine.

Suitable antioxidants include those commercially available under the tradenames Irganox^{®} 1010 (tetrakis(methylene(3,5-di-ter-butyl-4-hydroxyhydrocinnamate)) methane), Irgafos^{®} 168 (tris(2,4-ditert-butylphenyl)phosphate) and Irganox^{®} PS800 (propanoic acid, 3,3'-thiobis-1,1'-didodecyl ester) from BASF, Chinox^{®} 1010 (pentaerythritol tetrakis(3-(3,5-di-tert-butyl-4-hydroxyphenyl) propionate)) from Shuangjian, Evernox^{®} 1010 and Everfos^{®} 168 from Everspring Chemical, Songnox^{®} 10 and 1680 from Songwon, Irganox PS800 from BASF.

### Other additives

The hot melt adhesive composition may further comprise at least one other additive, preferably in an amount of from 0 to 5 %, for example from 0.1 to 5 %, by weight, by total weight of the adhesive composition.

The additives may be selected from the group consisting of inert colorants (e.g. titanium dioxide), fillers (e.g. talc, calcium carbonate, clay, silica, mica, wollastonite, feldspar, aluminum silicate, alumina, hydrated alumina, glass microspheres, ceramic microspheres, thermoplastic microspheres and mixtures thereof), surfactants, additional polymers other than styrene block copolymers, crosslinking agents, nucleating agents, reactive compounds, fire-retardant mineral or organic agents, ultraviolet (UV) or/and infrared (IR) light absorbing agents (for example HALS hindered amine light stabilizers), UV or/and IR fluorescing agents, wax, and mixtures thereof. These optional other additives are well known in this art.

The additional polymers may be chosen from the group consisting of polyolefins, amorphous poly-alpha-olefins, ethylene-vinyl acetate polymers (EVA), polyamides, and mixtures thereof. The hot melt adhesive may comprise from about 0 to about 5 % by weight of at least one additional polymer, by total weight of the composition. However, preferably, the holt melt composition does not comprise an additional polymer.

The wax may be selected from the group consisting of microcrystalline waxes, paraffin waxes, polyethylene waxes, polypropylene waxes, by-product polyethylene waxes, and Fischer-Tropsch waxes. Preferably, the holt melt composition does not comprise a wax.

Preferably, the hot melt adhesive composition does not comprise mineral oil, such as naphtenic oil or paraffinic oil.

### Hot melt adhesive composition

The hot melt adhesive composition may have a Brookfield viscosity at 150°C of from about 800 to about 9 000 mPa.s, preferably from about 1 000 to about 5 000 mPas. The Brookfield viscosity may be measured according to the standard method ASTM D-3236, using a Brookfield viscometer of the type Spindle 27, at a temperature of about 150°C.

The biocarbon content of the hot melt adhesive is preferably greater than or equal to 60 %, more preferably greater than or equal to 65 %, and even more preferably greater than or equal to 70 %.

The hot melt adhesive composition has preferably a glass transition temperature lower than or equal to 15°C, more preferably lower than or equal to 5°C, and even more preferably lower than or equal to 0°C.

The glass transition temperature is measured by dynamic mechanical analysis (DMA).

The total average styrene content of the hot melt adhesive composition preferably ranges from 5% to 15%, more preferably from 6% to 10%.

In case the styrene block polymeric component comprises only one styrene block copolymer, the total average styrene content of the hot melt adhesive composition is defined as the styrene content of the styrene block polymeric component multiplied by its quantity by weight in the hot melt adhesive composition.

In case the styrene block polymeric component comprises a mixture of styrene block copolymers, the total average styrene content of the hot melt adhesive composition is defined as the sum of styrene content of each styrene block copolymer present in the styrene block polymeric component multiplied by its quantity by weight in the total hot melt adhesive composition.
For example, if polymer X' is present at 25 weight % (wX') with a styrene content of 15% (sX') and polymer Y' is present at 25 weight % (wY') with a styrene content of 20 weight % (sY'). The average styrene content of the formula is calculated in the following way: wX'*sX'+wY'* sY' = 0,25*15 + 0,25*20 = 8,75 weight %.

The hot melt adhesive composition is preferably a hot melt pressure sensitive adhesive composition.

Preferably, the present invention concerns a hot melt adhesive composition comprising (or consisting essentially of, or consisting of):
- from 10% to 30% by weight of a styrene block polymeric component;
- from 45 % to 60% by weight of at least one tackifying resin, more preferably a mixture of at least one tackifying resin ii) and at least one tackifying resin iii) as defined above;
- from 3% to 30% by weight of at least one fatty acid derivative F1 having a weight average molecular weight lower than or equal to 1500 g/mol, the fatty acid derivative being preferably a fatty acid ester;
- from 5% to 30% by weight of at least one fatty acid derivative F2 having a weight average molecular weight higher than or equal to 2 000 g/mol, the fatty acid derivative F2 being preferably a fatty acid polyester;
- optionally from 0% to 5% by weight of a stabilizer;
- optionally from 0% to 5% by weight of at least one other additive, the total styrene content of the hot melt adhesive composition preferably ranging from 5 to 15%.

More preferably, the present invention concerns a hot melt adhesive composition comprising (or consisting essentially of, or consisting of):
- from 10% to 30% by weight of a styrene block polymeric component, said styrene block polymeric component comprising:
   ∘ from 10 to 100% by weight of at least one linear styrene triblock copolymer (a) ; and
   ∘ from 0 to 90 % by weight of at least one linear diblock styrene block copolymer (b),
- from 45 % to 60% by weight of a mixture of at least one tackifying resin ii) and at least one tackifying resin iii) as defined above;
- from 3% to 30% by weight of at least one fatty acid ester F1 having a weight average molecular weight ranging from 250 g/mol to 1 000 g/mol;
- from 5% to 30% by weight of at least one fatty acid polyester having a weight average molecular weight ranging from 3 000 g/mol to 12 000 g/mol;
- optionally from 0% to 5% by weight of a stabilizer;
- optionally from 0% to 5% by weight of at least one other additive, the total styrene content of the hot melt adhesive composition ranging from 6 to 10%.

The hot melt adhesive composition has advantageously an initial peel performance on cotton substrate of at least about 2 N/2.5 cm (2 N/inch).

The peel performance on cotton substrate is measured according to the method described in the example section below.

The hot melt adhesive composition advantageously exhibits good adhesion properties on a variety of substrate materials and fabrics, while making it possible to reduce and even avoid residues on the fabric (e.g. under garment) after removal of the article.

The hot melt adhesive composition advantageously exhibits good peel after exposure at body temperature to enable removal of the hygiene disposable article (such as for example pad) after being used by the consumer.

### Process for preparing the hot melt adhesive composition

The invention also relates to a process for preparing the hot melt adhesive composition as described above.

The hot melt adhesive composition may be prepared by mixing the at least one styrene block polymeric component, the at least one tackifying resin, the components F1 and F2, in the molten state. Optional other ingredients or additives of the composition, as described above, in particular the at least one stabilizer, may be mixed with the abovementioned components.

The hot melt adhesive composition of the present invention may be produced using any of the techniques known in the art. Preferably, the step of mixing is carried out at a temperature of from 140 to 160°C. The ingredients are preferably mixed for at least several hours, typically at least 3 hours, and preferably from 3 to 6 hours.

The hot melt adhesive composition according to the invention can be prepared in presence of dioxygen (such as under air atmosphere), or preferably under inert atmosphere e.g. under carbon dioxide or nitrogen to limit potential degradation by oxidative reactions.

The process for preparing the hot melt adhesive composition according to the invention preferably comprises:
- a first step of melting and mixing the styrene block polymeric component and the components F1 and F2,
- a second step of adding the tackifying resin into the mixture obtained in the previous step, under stirring,

Other useful optional ingredients or additives which may be present in the hot melt adhesive composition according to the invention, as described above, may be added at any step of the process according to the invention.

### Uses

The present invention also relates to the use of a hot melt adhesive composition as described above, for adhering a hygiene disposable article on a fabric.

The hygiene disposable article may be chosen from nonwoven hygiene disposable articles, preferably from the group consisting of disposable diapers, training pants, adult incontinent products (pads or briefs), periodic care products (napkins or pads) and surgical masks, more preferably from the group consisting of adult incontinent products (pads or briefs) and periodic care products (napkins or pads).

The fabric may be manufactured utilizing natural or synthetic fibers, including cotton, nylon, polyester, other man-made fibers and mixtures thereof.

The present invention also relates to the use of the hot melt adhesive composition as described above as positioning adhesive. Such class of adhesive is typically used to position an absorbent article on a garment such as underwear. These articles are removed from garment after use.

According to another aspect, the invention relates to an article comprising at least one interior or exterior surface, preferably at least one exterior surface, coated with the hot melt adhesive composition as described above. The article may be as described above and is preferably a hygiene disposable article, more preferably chosen from the group consisting of adult incontinent products (pads or briefs) and periodic care products (napkins or pads).

The present invention also relates to a disposable absorbent article including a top sheet, a backsheet, optionally an absorbent core disposed between the topsheet and the backsheet, a hot melt adhesive composition disposed on the garment-facing surface of the backsheet, the hot melt adhesive composition being as defined above.

All the description, embodiments, preferred embodiments defined above for the hot melt adhesive composition apply here for the disposable absorbent article without need to repeat it.

The disposable absorbent article being preferably selected from the group consisting of disposable diapers, training pants, adult incontinent products (pads or briefs), periodic care products (napkins or pads) and surgical masks, more preferably from the group consisting of adult incontinent products (pads or briefs) and periodic care products (napkins or pads).

The topsheet is typically designed to contact the body of the user and is liquid permeable. The topsheet is typically constructed of any suitable material that is easily penetrated by bodily exudates. The topsheet optionally includes a plurality of apertures formed therethrough to permit body fluid to pass more readily into the absorbent core.

The backsheet is typically liquid-impermeable and designed to face the inner surface, i.e. the crotch portion of the garment (e.g. underwear) of a user. The backsheet optionally is constructed to permit a passage of air or vapor out of the disposable absorbent article while still blocking passage of liquids.

The hot melt adhesive composition of the invention can be disposed on the garment facing surface of the absorbent article, or even on the garment facing surface of the backsheet. A release liner optionally is disposed on the hot melt adhesive composition to protect it until use.

The hot melt adhesive composition may be useful in a variety of other applications and constructions, for example forming permanent bonds, temporary bonds (e.g. removable and repositionable adhesive applications), medical dressings (e.g. wound care products), bandages, surgical pads, drapes, gowns, labels, tapes, filters, and combinations thereof.

The hot melt adhesive composition may be useful in a variety of forms, including coating (continuous or discontinuous (e.g. random, pattern, array, spiral, dots, spots, and combinations thereof) coatings), film, bead, sheet, fiber, filament, web (e.g. woven and nonwoven), and combinations thereof.

The ranges disclosed in this description include both the lower and the upper limit thereof. For example, the expressions "ranging from x to y" or "between x and y" comprises the limits x and y.

### Examples

The following examples illustrate the invention without limiting it.

### Material used in the examples

The components used in the examples are described below.
- Sinopec^{®} 1126 from SINOPEC, a SIS (styrene block content of about 16 %, diblock content of about 50 %);
- Europrene SOL^{®}TE9326 from Versalis, a linear SIS (with 30% styrene content, and 15% diblock);
- Vector^{®}4411S from TSRC, a linear SIS (with 44% styrene content and 0% diblock);
- Polyester P from Vandeputte (homopolymer made by polycondensation from ricinoleic acid, with acid value of 12-16 mgKOH/g and a hydroxyl value max 30mg KOH/g). Renewable carbon content is 100%;
- Pionier^{®} TP130S from H&R: oleyl oleate. Renewable carbon content is 100% (acid number of 0.2 mg KOH/g);
- IRGANOX^{®} 1010 from BASF which is a phenolic type antioxidant
- Dercolyte^{®}M105 from DRT-Pinova: Beta pinene polyterpene resin made from the polymerization of a mix of alpha and beta pinene, having a Ring and Ball softening point ranging of 105°C. Renewable carbon content is 100%.
- Sylvalite^{®}9000 from Kraton: fully hydrogenated rosin ester resin, having a Ring and Ball softening point ranging of 70°C.
- Sukorez^{®}SU420 from Kraton: DCPD/C9 hydrocarbon partially hydrogenated resin having a Ring and Ball softening point ranging of 120°C.

### Preparation of the adhesive compositions

The hot melt adhesive compositions are prepared by simple mixing of its ingredients. Polymer(s), components F1 and F2, and stabilizer(s) are mixed together and heated at 145 °C until everything dissolved as a homogeneous mixture. Then, resin(s) is added at the same temperature until everything dissolved as a homogeneous mixture. At the end, the mixture is cooled down and collected to be used as it.

### Preparation of a laminate by means of a lab coater equipment

A laminating device is used, operating continuously at a line speed of approximately 25 m/minute. In this machine, the coating is made with a slot nozzle:
The two substrates employed are a release liner and a polyethylene non breathable back-sheet.

The hot melt adhesive composition is heated in the melter at a temperature of 150°C. It is then coated at the same temperature of 150°C and at a coating weight of approximately 20 g/m2 on the release paper, which is then transferred on the PE non breathable.

For all compositions, the resulting coating pattern is quite adequate and is typical of a good processability. It corresponds to a continuous layer, which is centered on said release paper and along an axis, which is perpendicular to the axis of the reel.

The PE sheet is then put into contact with the coated surface of the release film by means of a nip roll applying a pressure of 3 bar.

### Test methods

### Initial peel performances and "in-use pee/" performances

The laminate obtained as described above was left for 24 hours at ambient temperature (23°C) and at 50 % relative humidity.

A rectangular strip measuring 2.5 cm by approximately 15 cm was cut out in the coated central area of the laminate. The release film was removed and the sample laminate was folded onto itself over approximately 2.5 cm of the sample, leaving about 10.0 cm of adhesive composition exposed. The fabric was put onto the back-sheet coated with the adhesive composition without any additional force. The laminate was combined with the fabric by two passes of a 2 kg rubber roller at 152.4 cm per minute.

As fabric, cotton fabric used is a standard cotton type 437W whitened - 144g/m². (reference 437-60 by VVC) or a polyester fabric (100 % polyester, microfiber; quality: 229; color: black 6391014; supplier: Bouvelle S.A.S) was used.

Then, the peel performances of the samples (i.e. the laminates combined with the fabric) were determined as follows.

For *"in use peel",* : samples of laminates combined with the fabric were prepared as described above. The fabric used in this test was a polyester fabric as disclosed above. After reeling, the samples were left in an oven at 40.6°C under a load of 250g during 4 hours. Samples were then conditioned one hour before testing (after removing the weights and taking out the samples). The samples were then subjected to peel test as described herein.

The two substrates of each sample were separated, starting from one end of the rectangular strip, over approximately 2 cm. The free end of the laminate was fixed to a lower clamping devices connected to a movable part of a tensile testing device and the free end of the fabric was fixed to an upper clamping device connected to a stationary part of the tensile testing device, wherein the stationary and moving parts were located on a vertical axis and spaced by 50 mm.

While a drive mechanism communicated, to the movable part, a uniform speed of 500 mm/minute, resulting in the separation of the two substrates, the separated ends of which were gradually displaced along a vertical axis while forming an angle of 180°, the stationary part, connected to a dynamometer, measured the force withstood by the sample thus held.

The result corresponding to the initial peel after 24 hours at 23°C or to the *"in-use peel",* is expressed in N/2.5 cm.

### Residue evaluation

Residues left were observed after *in-use peel* and assessed by visual inspection: the fabric was observed carefully and the presence of spots on the black fabric lead to a score of "Yes". "No" means that no spot of glue are observed on fabric after peel test.

### Glass transition temperature measurement

### Dynamical Mechanical Analysis (DMA) - Temperature Sweep

A rheometer applied a shear stress to an adhesive and measured the resulting strain (shear deformation) response as function of a temperature cooling ramp.

Equipment: DHR Rheometer by TA Waters, which applied a small oscillatory stress to achieve a constant oscillatory strain within the linear viscoelastic region of the adhesive (e.g. 1%).

Temperature-dependent parameters:
- Storage Modulus
- Loss Modulus
- Loss Factor

General protocol: The adhesive was placed between a Peltier plate acting as lower, fixed plate and an upper plate with a radius R of 10 mm, which was connected to the drive shaft of a motor to generate the shear stress. The gap between both plates has a height H of 1,500 µm. The Peltier plate controls the temperature of the material (+/- 0.5°C).

Test execution:
After GAP 0 at 80°C, setting the temperature to the start temperature (i.e. 120°C);
placing the adhesive (approximately 1 cm3) on the Peltier plate;
lowering the upper plate to a gap of 1,700 µm till its contacts the adhesive;
removing excessive material and setting the temperature to 120°C;
lowering the upper plate to a gap of 1,500 µm;
setting the temperature to the start temperature of 120°C, the constant oscillation frequency to 1 Hz; from 120°C to 40°C the cooling rate of 6°C/min with the constant measurement strain to 1%; from 40°C to -10°C, the cooling rate of 2°C/min with the constant measurement strain to 0.1%
after completing the test, melting the adhesive, lifting the upper plate and removing the adhesive from both the Peltier plate and the upper plate; and setting the temperature back to room temperature.

Result: Tx was measured by measuring the crossover temperature between storage modulus and loss modulus for temperature higher than 50 °C. Tg was measured by measuring the temperature at the maximum of loss factor for temperature lower than 50 °C.

### Example 1 : results

In the following table, the amounts of the components of the compositions are indicated in parts by weight.

| **Composition No.** | **1 (invention)** | **2 (invention)** | **3 (comparative)** | **4 (invention)** | **5 (invention)** |
|---|---|---|---|---|---|
| **Polyester P** | 10.56 | 12.6 | 21 | 10.56 | 7.04 |
| **Pioner ^{®} TP130S** | 7.04 | 8.4 | - | 7.04 | 10.56 |
| **Dercolyte^{®} M105** | 27.64 | 25.63 | 25.63 | 24.54 | 27.64 |
| **Sylvalite^{®}9000** | 27.64 | 25.63 | 25.63 | 24.54 | 27.64 |
| **Sukorez ^{®}SU420** | - | - | - | 6.2 | - |
| **Europrene^{®} Sol TE9326** | 26.12 | 26.74 | 26.74 | 26.12 | 26.12 |
| **Irganox^{®} 1010** | 1.0 | 1.0 | 1.0 | 1.0 | 1.0 |
| **Total** | 100 | 100 | 100 | 100 | 100 |
| **% styrene in formula** | 7.8 | 8.0 | 8.0 | 7.8 | 7.8 |
| | | | | | |
| | | | | | |
| **Tg** | -3.32 | < -10°C | -0.16 | -1.65 | -6.62 |
| **Initial peel on cotton (N /2.5cm)** | 2.51 | 2.21 | 3.68 | 2.65 | 2.68 |
| **Residue *(in use* peel on polyester)** | NO | NO | YES | NO | NO |

The peel performances are considered as good when they reach at least 2.0 N/2.5 cm.

Compositions No. 3 is comparative composition; compositions 1, 2, 4 and 5 are compositions according to the invention.

All the compositions 1, 2, 4 and 5 tested for their peel performances on cotton fabric advantageously showed good adhesion properties on this fabric (higher than 2 N/2.5 cm). In addition, they advantageously left no visible residues after peeling of the substrate from the polyester fabric.

In contrast, the use of comparative composition N°3 comprising not a mixture or component F1 and F2 as defined above resulted in the presence of adhesive residues when the substrate was removed.

## Claims

1. A hot melt adhesive composition comprising:
- a styrene block polymeric component;
- at least one tackifying resin;
- at least one fatty acid or fatty acid derivative F1 having a weight average molecular weight lower than or equal to 1500 g/mol;
- at least one fatty acid derivative F2 having a weight average molecular weight higher than or equal to 2 000 g/mol.

2. The hot melt adhesive composition according to claim 1, wherein the styrene block copolymer is selected from the group consisting of SB, SI, SEB, SEP, SBBS, SBS, SEBS, SEPS, SEEPS, SIBS, SIS, random-block SBR, random-block SIR and mixtures thereof.

3. The hot melt adhesive composition according to anyone of claim 1 or 2, wherein the styrene block polymeric component comprises at least one SIS copolymer or at least one random block SBR, more preferably at least one SIS copolymer.

4. The hot melt adhesive composition according to anyone of claim 1 to 3, wherein it comprises from 5 % to 35 %, more preferably from 10% to 30%, and even more preferably from 15% to 30% by weight of styrene block polymeric component, based on the total weight of the hot melt adhesive composition.

5. The hot melt adhesive composition according to anyone of claim 1 to 4, wherein the at least one tackifiying resin is chosen from the group consisting of:
- i) natural and modified rosins and the hydrogenated derivatives thereof, such as, for example, gum rosins, wood rosins, tall-oil rosins, distilled rosins, dimerized rosins and polymerized rosins;
- ii) glycol, glycerol and pentaerythritol esters of natural and modified rosins, and the hydrogenated derivatives thereof, such as, for example, the glycerol esters of pale wood rosin, the glycerol esters of hydrogenated rosin, the glycerol esters of polymerized rosin, the pentaerythritol esters of pale wood rosin, the pentaerythritol esters of hydrogenated rosin, the pentaerythritol esters of tall oil rosin, the tall oil rosin esters obtained from a mixture of glycerol and pentaerythritol, the pale wood rosin esters obtained from a mixture of glycerol and pentaerythritol, the hydrogenated rosin esters obtained from a mixture of glycerol and pentaerythritol, the esters of polymerized rosin obtained from a mixture of glycerol and pentaerythritol, and the phenolic modified pentaerythritol esters of rosin;
- iii) polyterpene homopolymers;
- iv) copolymers of terpene with a diene monomer;
- v) phenolic-modified terpene resins such as, for example those resulting from the condensation, in an acidic medium, of a terpene and a phenol;
- and mixtures thereof.

6. The hot melt adhesive composition according to anyone of claim 1 to 5, wherein it comprises from 30% to 65 %, more preferably from 45% to 60 %, even more preferably from 50% to 60%, by weight of a tackifying resin (or of the mixture of tackifying resins in case a plurality of tackifying resins are present in the hot melt adhesive composition), based on the total weight of the hot melt adhesive composition.

7. The hot melt adhesive composition according to claim 5, wherein it comprises from 15% to 35% by weight of at least one tackifier resin ii) and from 15% to 35% by weight of at least one tackifier resin iii).

8. The hot melt adhesive composition according to anyone of claims 1 to 7, wherein the fatty acid or fatty acid derivative F1 has a weight average molecular weight lower than or equal to 1 000 g/mol, more preferably ranges from 250 g/mol to 1 000 g/mol, and even more preferably, the fatty or fatty acid derivative F1 has a weight average molecular weight ranging from 300 g/mol to 800 g/mol.

9. The hot melt adhesive composition according to anyone of claims 1 to 8, wherein the fatty acid derivative is selected from the group consisting of: fatty acid amides, fatty acid esters, dimers or trimers fatty acid, fatty alcohols, fatty aldehydes, fatty ketones, their hydrogenated derivatives, and mixtures thereof.

10. The hot melt adhesive composition according to anyone of claims 1 to 9, wherein the fatty acid derivative F1 is a fatty ester selected from the group consisting of:
- fatty acid esters resulting from chemical reaction between polyol and/or monol with one or several fatty acids or triglycerides, the chemical reaction being selected from esterification, transesterification;
- fatty acid esters resulting from functionalization (derivatization) of another fatty acid ester;
- monoglyceride, diglyceride, triglycerides, and mixtures thereof;
- fatty acid polyesters; and
- mixtures thereof.

11. The hot melt adhesive composition according to anyone of claims 1 to 10, wherein the fatty acid or fatty acid derivative F1 has a viscosity lower than or equal to 5000 mPas at 25°C, more preferably lower than or equal to 3000 mPas at 25°C.

12. The hot melt adhesive composition according to anyone of claims 1 to 11, wherein the total content of fatty acid or fatty acid derivatives F1 ranges from 3% to 50% by weight, more preferably from 3% to 30% by weight, and even more preferably from 3% to 20% by weight based on the total weight of the hot melt adhesive composition.

13. The hot melt adhesive composition according to anyone of claims 1 to 12, wherein F1 is a fatty acid derivative, more preferably it is a fatty acid ester, and even more preferably a fatty acid ester resulting from chemical reaction between polyol and/or monol with one or several fatty acids or triglycerides, the chemical reaction being selected from esterification, transesterification.

14. The hot melt adhesive composition according to anyone of claims 1 to 13, wherein the fatty acid derivative F2 has a weight average molecular weight higher than or equal to 2 500 g/mol, more preferably ranges from 3 000 g/mol to 12 000 g/mol, and even more preferably, the fatty acid derivative F2 has a weight average molecular weight ranging from 3 000 g/mol to 6 000 g/mol.

15. The hot melt adhesive composition according to anyone of claims 1 to 14, wherein the fatty acid derivative F2 has an acid number ranging from 1 to 20, more preferably from 3 to 20 mg KOH/g.

16. The hot melt adhesive composition according to anyone of claims 1 to 15, wherein the fatty acid derivative F2 is a fatty acid ester, more preferably a fatty acid polyester, and even more preferably, the fatty acid derivative F2 is a homopolymer of ricinoleic acid.

17. The hot melt adhesive composition according to anyone of claims 1 to 16, wherein the total content of fatty acid derivatives F2 in the hot melt adhesive composition ranges from 3% to 50% by weight, more preferably from 5% to 30% by weight, and even more preferably from 7% to 20% by weight based on the total weight of the hot melt adhesive composition.

18. The hot melt adhesive composition according to anyone of claims 1 to 17, wherein the weight ratio R = F1 / F2 ranges from 10 / 90 to 90 / 10, more preferably from 15/85 to 85/15, and even more preferably from 20 / 80 to 60 / 40.

19. The hot melt adhesive composition according to anyone of claims 1 to 18, wherein the biocarbon content of the hot melt adhesive is greater than or equal to 60 %, preferably greater than or equal to 65 %, and even more preferably greater than or equal to 70 %.

20. The hot melt adhesive composition according to anyone of claims 1 to 19, wherein the total average styrene content of the hot melt adhesive composition ranges from 5% to 15%, preferably from 6% to 10%.

21. Use of a hot melt adhesive composition as defined in anyone of claims 1 to 20, for adhering a hygiene disposable article on a fabric.

22. Article comprising at least one interior or exterior surface, preferably at least one exterior surface, coated with the hot melt adhesive composition as defined in anyone of claims 1 to 20.
